Europäisches Patentamt

European Patent Office

Office européen des brevets

(19)

(11) Veröffentlichungsnummer : **0 368 996 B1**

(12) # EUROPÄISCHE PATENTSCHRIFT

(45) Veröffentlichungstag der Patentschrift :
**19.08.92 Patentblatt 92/34**

(51) Int. Cl.$^5$ : **B23Q 39/02, B23Q 1/14**

(21) Anmeldenummer : **89907112.0**

(22) Anmeldetag : **02.06.89**

(86) Internationale Anmeldenummer :
**PCT/EP89/00619**

(87) Internationale Veröffentlichungsnummer :
**WO 89/11951 14.12.89 Gazette 89/29**

(54) **BOHR- UND FRÄSWERK.**

(30) Priorität : **03.06.88 DE 3818903**

(43) Veröffentlichungstag der Anmeldung :
**23.05.90 Patentblatt 90/21**

(45) Bekanntmachung des Hinweises auf die
Patenterteilung :
**19.08.92 Patentblatt 92/34**

(84) Benannte Vertragsstaaten :
**AT CH DE FR GB IT LI**

(56) Entgegenhaltungen :
**CH-A- 446 856**
**DE-A- 2 224 761**
**DE-A- 3 420 531**
**DE-B- 1 264 927**
**FR-A- 1 578 165**

(56) Entgegenhaltungen :
**FR-A- 2 115 128**
**FR-A- 2 380 099**
**FR-A- 2 578 777**
**GB-A- 2 061 159**
**US-A- 2 354 414**
**US-A- 4 589 311**

(73) Patentinhaber : **STAMA MASCHINENFABRIK
GMBH**
**Siemensstr. 23**
**W-7311 Schlierbach (DE)**

(72) Erfinder : **STARK, Gerhard**
**Beethovenstr. 21**
**W-7312 Notzingen (DE)**

(74) Vertreter : **Wuesthoff, Franz, Dr.-Ing. et al**
**Wuesthoff & Wuesthoff Patent- und
Rechtsanwälte Schweigerstrasse 2**
**W-8000 München 90 (DE)**

EP 0 368 996 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein Bohr- und Fräswerk mit
- einem Werkstückträger, der zum Einspannen eines Werkstücks ausgebildet und schrittweise um eine waagerechte Schwenkachse schwenkbar ist, welche mit der Achse des Werkstücks übereinstimmt,
- zummindest einer Werkzeugspingel, die eine im rechten Winkel zur Schwenkachse angeordnete Spindelachse hat und längs dieser Spindelachse verstellbar ist,
- einem Fahrständer, der in einer zur Schwenkachse parallelen Richtung sowie in einer zur Schwenkachse und zur Spindelachse rechtwinkligen Richtung verschiebbar ist und die Werkzeugspidel trägt, sowie
- einem Gegenhalter mit Spannfutter zum zusätzlichen Abstützen des Werkstücks,

Ein solches Bohr- und Fräswerk ist z.B. aus der DE-A-2224761 bekannt, die den nächstliegen den Stand der Technik beschreibt. Zur spanabhebenden Bearbeitung von Werstücken sind zwei wesentlich verschiedene Bearbeitungsarten bekannt. Zum einen kann das zu bearbeitende Werkstück gedreht werden, während das Werkzeug stillsteht, und zum anderen kann das zu bearbeitende Werkstück ortsfest eingespannt werden, während das Werkzeug bewegt wird. Die erstgenannte Art der Bearbeitung erfolgt zum Beispiel auf einer Drehmaschine, die letztgenannte in sogenannten Bearbeitungszentren wie Bohr- und Fräswerken.

Soll mit einer Drehmaschine aus einer langen Materialstange eine Vielzahl von Kleinteilen durch spanabhebende Bearbeitung hergestellt werden, so muß die Materialstange mit hoher Drehzahl gedreht werden, was Probleme aufwirft, die nur mit erheblichem Aufwand zu lösen sind.

Herkömmliche Bohr- und Fräswerke mit vertikaler oder horizontaler Anordnung des Bohr- oder Fräswerkzeuges haben den Nachteil, daß sie nur Werkstücke bearbeiten können, die zuvor auf ein geeignetes Format gebracht, beispielsweise gesägt oder gegossen worden sind. Jedes einzelne Werkstück muß mittels einer Spannvorrichtung auf dem Maschinentisch des Bohr- und Fräswerkes fixiert werden. Sollen mehrere Seiten des Werkstückes bearbeitet werden und sind eng beeinanderliegende Bohrungen auszuführen, so sind oftmals mehrere Aufspannungen des Werkstückes erforderlich. Dazu sind Aufspannvorrichtungen erforderlich, die meist für jedes Werkstück gesondert konstruiert und gefertigt werden müssen. Bei wechselnden Aufspannungen eines Werkstückes treten Genauigkeitsprobleme auf, deren Lösung ebenfalls mit hohen Kosten verbunden ist. Durch begrenzte Stabilität der Aufspannung des Werkstückes kann auch die Zerspanungsleistung bei der spanabhebenden Bearbeitung begrenzt sein.

Das vorstehende gilt beispielsweise für eine aus der DE 3632319 A1 bekannte Werkzeugmaschine mit an einem Maschinengestell in vertikaler (Z-)Richtung verfahrbar gelagertem Bohr- und Frässpindelstock, bei der am Maschinengestell eine Zentrier-Spanneinrichtung für Werkstücke gelagert ist. Die Zentrier-Spanneinrichtung hat die Form eines Drehkopf-Spannfutters und ist mit einem Motor in die jeweils gewünschte Winkellage des Werkstückes drehbar. Eine Koordinatensteuerung ermöglicht es, das Werkstück um seine Längsachse mit hoher Präzision zu drehen. Infolgedessen können Bohr- und Fräsarbeiten an beliebigen Mantelflächenabschnitten des Werkstückes ausgeführt werden. Der Bohr- und Frässpindelstock ist an ortsfesten Säulen geführt. Das Werkstück ist während der Bearbeitung in mindestens einem Spannstock eingespannt, der an einem in X- und Y-Richtung bewegbaren Werkzeugschlitten angeordnet ist. Während der Bearbeitung ist die Zentrier-Spanneinrichtung geöffnet, damit das Werkstück durch Verfahren des Werkzeugschlittens in X-Richtung sowie - begrenzt durch die Durchlaßweite der Zentrier-Spanneinrichtung - auch in Y-Richtung bewegbar ist.

Die Automatisierung der Rohteilezufuhr und des Abtransportes fertiger Werkstücke erfordert bei herkömmlichen Bohr- und Fräswerken einen erheblichen Aufwand. So werden für diesen Zweck Palettenwechsler und Palettenspeicher eingesetzt, die den oben beschriebenen hohen Aufwand an Aufspannvorrichtungen noch vervielfachen. Technisch aufwendige Roboter und Portalladeeinrichtungen erfordern mindestens den doppelten Aufwand für Spannvorrichtungen, wenn nicht lange Wartezeiten der Maschine in Kauf genommen werden sollen.

Der Erfindung liegt die Aufgabe zugrunde, ein Bohr- und Fräswerk derart zu gestalten, daß mit einfachen und kostengünstigen Mitteln eine automatische Rohteilezufuhr zur Mehrseitenbearbeitung der Werkstücke sowie deren automatischer Abtransport nach Fertigstellung ermöglicht wird.

Erfindungsgemäß wird diese Aufgabe bei einem Bohr- und Fräswerk der eingangs beschriebenen Gattung dadurch gelöst daß
- der Werkstückträger einen Durchlaß aufweist, durch den eine Werkstopffstange derart hindurchschiebbar ist, daß sie mit ihrem Endabschnitt welcher ein Werkstück bildet, in den Arbeitsbereich der Werkzeugspindel hineinragt,
- am Fahrständer eine Abtrenneinheit zum Abtrennen des Endabschnitts der Werkstoffstange angeordnet ist, und
- längs der Schwenkachse ein zusätzlicher Schlitten verfahrbar ist, auf dem eine Greif- und Schwenkeinheit als Gegenhalter angeordnet ist, die über dessen Spannfutter den aus dem Werkstückträger herausragenden Abschnitt der Werkstoffstange ergreift und nach Abtrennen desselben um eine die Schwenkachse des Werkstückträgers rechtwinklig schneidende Achse derart schwenkbar ist, daß die durch das Abtrennen entstandene Trennfläche des Abschnitts der Werkstoffstange in den Arbeitsbereich der Werkzeugspindel gelangt.

Erfindungsgemäß kann also im Wortsinn von der Stange gearbeitet werden. Die Werkstücke brauchen nicht vor der spanabhebenden Bearbeitung gesägt oder gesondert gegossen zu werden, sondern sie werden direkt an der Stange bearbeitet und dann abgeschnitten.

Vorteilhafte Weiterbildungen der Erfindung ergeben sich aus den Unteransprüchen.

Mit der Erfindung können Bohr- und Fräswerke über den jetzt üblichen Zwei-Schichtbetrieb hinaus verwendet werden. Das erfindungsgemäße Bohr- und Fräswerk ermöglicht einen automatischen mannlosen Betrieb, z.B. während der Nacht oder an Wochenenden.

Nachfolgend wird ein Ausführungsbeispiel der Erfindung anhand der Zeichnungen näher beschrieben. Es zeigen:

Fig. 1 eine Seitenansicht eines Bohr- und Fräswerkes;

Fig. 2 die zugehörige Draufsicht,

Fig. 3 den Schnitt III-III gemäß Fig. 1,

Fig. 4a einen vergrößerten Ausschnitt aus Fig. 1 mit weiteren Einzelheiten und

Fig. 4b die Ansicht in Richtung des Pfeils b in Fig. 4a.

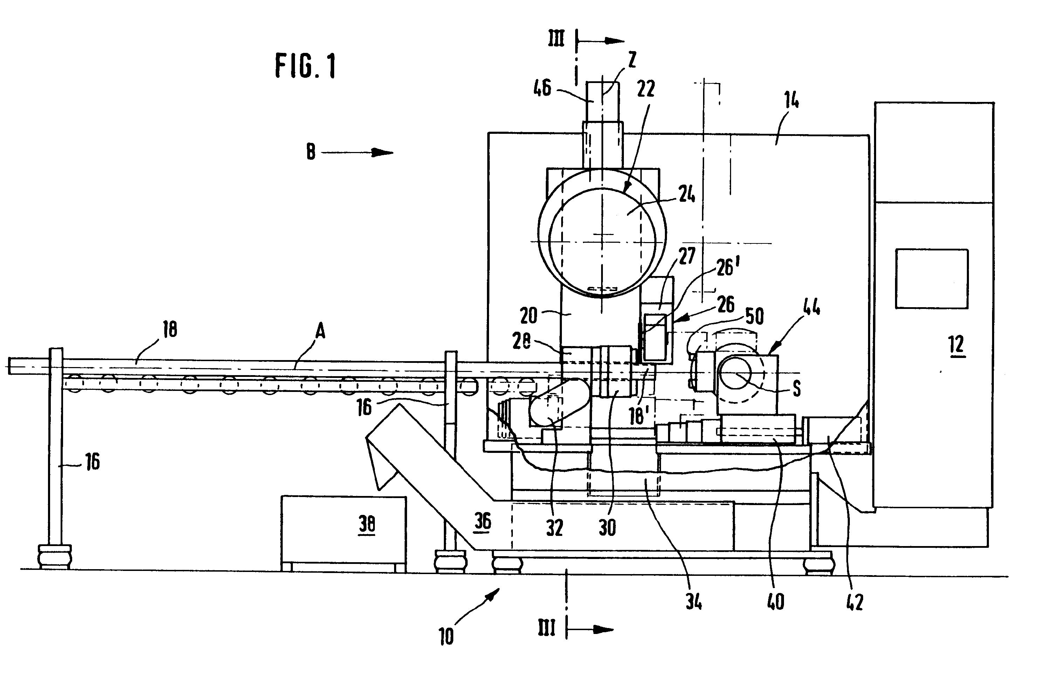

Gemäß Fig. 1 weist das Bohr- und Fräswerk ein Maschinengestell 10 und einen herkömmlichen Schaltschrank 12 auf. Der Arbeitsbereich des Bohr- und Fräswerkes ist durch ein zumindest teilweise durchsichtiges Schutzgehäuse 14 abgedeckt.

Auf einer Abstützung 16 ist eine Werkstoffstange 18 geführt, deren gemäß Fig. 1 rechter Endabschnitt 18′ das zu bearbeitende Werkstück bildet. Die Längsachse der Werkstoffstange 18 ist mit A bezeichnet; sie ist waagerecht.

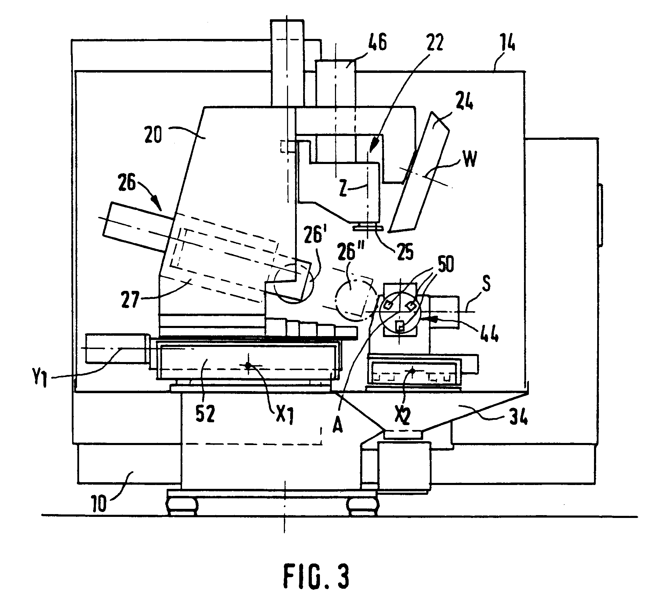

Ein als solcher bekannter Fahrständer 20 ragt vertikal vom Maschinengestell 10 auf. Der Fahrständer 20 ist längs einer zur Achse A parallelen Achse X1 sowie im rechten Winkel dazu längs einer ebenfalls waagerechten Achse Y1 verstellbar. Am Fahrständer 20 ist eine Vertikal-Bearbeitungseinrichtung 22 geführt; diese trägt eine Werkzeugspindel 25 (Fig. 3), deren Achse die Z-Achse eines räumlichen Koordinatensystems bildet und beim dargestellten Ausführungsbeispiel senkrecht steht. Weiterhin ist ein als solches ebenfalls bekanntes Werkzeugmagazin 24 um seine eigene Achse W drehbar am Fahrständer 20 angeordnet.

Gemäß Fig. 1, 2 und 3 ist eine Abtrenneinheit 26 an einem Schlitten 27 angeordnet, der direkt am Fahrständer 20 geführt, also mit diesem bewegbar ist. Die Abtrenneinheit 26 weist eine Kreissäge 26′ auf und ist mittels des Fahrständers 20 parallel zur Längsachse A der Werkzeugstange bewegbar. Somit kann die Kreissäge 26′ axial in bezug auf das Werkstück 18′ positioniert werden. Zum Absägen des Werkstückes 18′ von der Werkstoffstange 18 wird die Kreissäge 26′ mittels ihres Schlittens 27 radial in bezug auf die Längsachse A der Werkstoffstange 18 bewegt.

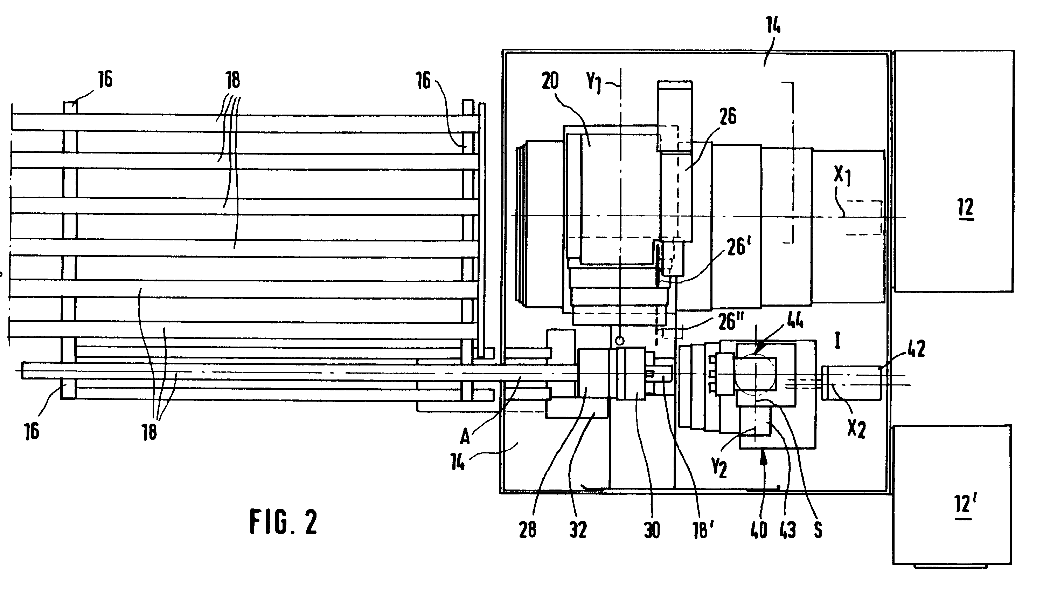

Gemäß Fig. 1 und 2 ist auf dem Maschinengestell 10 ein Rundtisch 28 so angeordnet, daß er um die Längsachse A der Werkstoffstange 18 drehbar ist. Der Rundtisch 28 weist mittig ein Loch auf, durch welches sich die Werkstoffstange 18 erstreckt, damit ihr Endabschnitt 18′, welcher das Werkstück bildet, in den Arbeitsbereich der Werkzeugspindel 25 ragt. In Fig. 1 ist an der rechten Seite des Rundtisches 28 als Werkstückträger 30 ein Backenfutter angeordnet, mit dem die Werkstoffstange 18 kurz vor ihrem Endabschnitt 18′ einspannbar ist, so daß der Endabschnitt 18′ bei der spanabhebenden Bearbeitung mittels eines in der Werkzeugspindel 25 eingespannten Werkzeuges präzise positioniert ist. Bei der spanabhebenden Bearbeitung des Endabschnittes 18′ bewegt sich die Werkstoffstange 18 nicht.

Zum Drehen der Werkstoffstange 18 in unterschiedliche Bearbeitungsstellungen, in denen der Endabschnitt 18′ von je mindestens einem in der Werkzeugspindel 25 eingespannten Werkzeug bearbeitet wird, wird der Rundtisch 28 schrittweise um die Achse A gedreht. Der Endabschnitt 18′ kann also in jede beliebige Stellung in bezug auf das Werkzeug gedreht werden; insbesondere können bei einem kubischen Werkstück alle vier Umfangsseiten dem Werkzeug zur Bearbeitung gegenüberliegend positioniert werden. Der Rundtisch 28, der mit diesem fest verbundene Werkstückträger 30 und die darin eingespannte Werkstoffstange 18 sind mittels eines Antriebs 32 schrittweise um die Achse A drehantreibbar.

Die bei der Bearbeitung des Werkstückes entstehenden Späne gelangen über eine Spänerutsche 34 und einen Späneförderer 36 in einen Spänebehälter 38.

Parallel und quer zur Längsachse A der Werkstoffstange 18, in Richtung der Achsen X2 und Y2 ist eine Kreuzschlittenanordnung 40 mittels zweier Antriebe 42 und 43 verfahrbar. Fig. 1 zeigt eine erste Variante der Kreuzschlittenanordnung 40. Hier ist eine Greif- und Schwenkeinheit 44 auf der Kreuzschlittenanordnung 40 montiert. Mittels Greifer 50 ist das Werkstück 18′ greifbar; nach Absägen des Werkstückes 18′ mittels der Kreissäge 26′ (Fig. 1) kann die Greif- und Schwenkeinheit 44 um eine Achse S geschwenkt werden, welche die Längsachse A der Werkstoffstange 18 rechtwinklig schneidet. Nach einer Schwenkung um 90° wird die Kreuzschlittenanordnung 40 in Fig. 1 nach links bewegt; so kann die zuvor noch unbearbeitet gebliebene Trennfläche des Werkstückes 18′ dem Werkzeug der Werkzeugspindel 25 gegenüberliegend positioniert und bearbeitet werden.

Es ist auch möglich, in der Werkzeugspindel 25 einen Winkel-Bohr-Fräskopf einzuspannen, mit dem beide axialen Stirnflächen des Werkstückes 18′ bearbeitet werden können, nämlich wenn das Werkstück noch nicht von der Werkstoffstange 18 mittels der Kreissäge 26 abgetrennt ist, die in Fig. 1 rechts liegende Stirnfläche und dann, wenn das Werkstück bereits abgetrennt und mittels der Greifer 50 erfaßt ist, die dann in Fig. 1 links freiliegende Stirnfläche. In diesem Fall braucht die Greifeinheit 44 nicht schwenkbar zu sein.

Fig. 2 zeigt eine Variante der Erfindung, bei der mehrere Werkstoffstangen 18 in einem Magazin dem Bohr- und Fräswerk zuführbar sind. Die Bearbeitung ist so in einfacher Weise automatisierbar. Stangen-Magazine und andere Zuführeinrichtungen sind dem Fachmann bekannt.

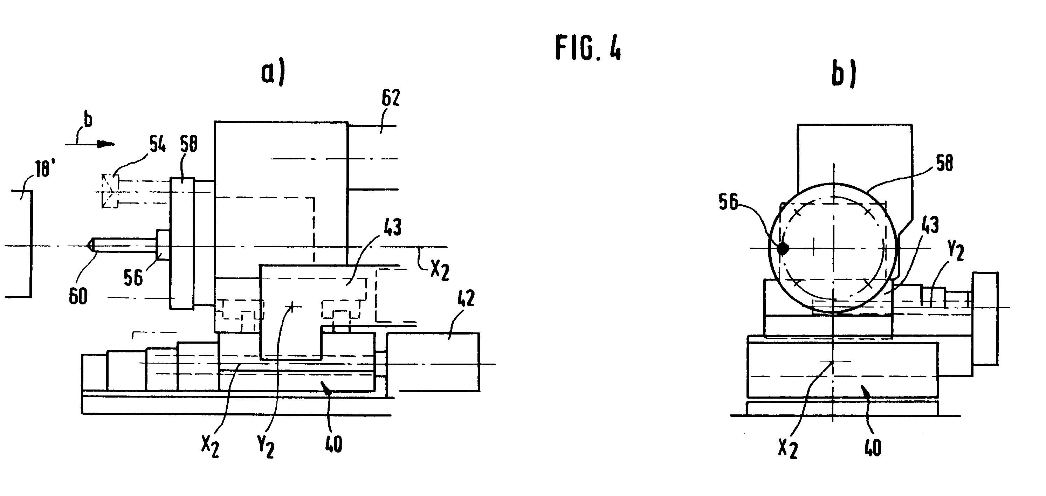

Fig. 4a ist eine Seitenansicht der Kreuzschlittenanordnung 40; Fig. 4b eine Ansicht in Richtung des Pfeiles b in Fig. 4a. Anstelle der beschriebenen Greif- und Schwenkeinheit 44 ist auf der Kreuzschlittenanordnung 40 ein Revolverkopf 58 montiert, der mehrere Werkzeugspindeln 56 trägt, die durch einen Motor 62 angetrieben werden. Der gleiche Motor 62 läßt sich von den Werkzeugspindeln 56 abkuppeln und mit dem Revolverkopf 58 kuppeln, um jeweils ein Werkzeug, z.B. das Werkzeug 60, in Arbeitsposition zu bringen.

Ein derartiger Revolverkopf 58 kann mit verschiedenen Werkzeugen (beim dargestellten Ausführungsbeispiel acht Werkzeuge) die freie Stirnseite des Werkstückes 18′ axial fertig bearbeiten. Auf diese Weise kann die zuvor mittels der Werkzeugspindel 25 durchgeführte Radialbearbeitung ergänzt werden.

Danach wird das Werkstück 18′ mittels der Kreissäge 26′ (Fig. 1) abgesägt und entweder abtransportiert oder an die oben beschriebene Greif- und Schwenkeinheit 44 übergeben.

In Fig. 4a ist mit strichpunktierten Linien angedeutet, daß eine Werkzeugspindel 25 blockiert und mit einem Gegenhalter 54 ausgerüstet sein kann, der das Werkstück 18′ an seinem freiliegenden Ende abstützt. Dies ist insbesondere bei dünnen Werkstoffstangen 18 von Vorteil.

## Patentansprüche

1. Bohr- und Fräswerk mit
– einem Werkstückträger (30), der zum Einspannen eines Werkstücks ausgebildet und schrittweise um eine waagerechte Schwenkachse (A) schwenkbar ist, welche mit der Achse des Werkstücks übereinstimmt,
– zumindest einer Werkzeugspindel (25), die eine im rechten Winkel zur Schwenkachse (A) angeordnete Spindelachse (Z) hat und längs dieser Spindelachse (Z) verstellbar ist,
– einem Fahrständer (20), der in einer zur Schwenkachse (A) parallelen Richtung (X-Achse) sowie in einer zur Schwenkachse (A) und zur Spindelachse (Z) rechtwinkligen Richtung (Y-Achse) verschiebbar ist und die Werkzeugspindel (25) trägt, sowie
– einem Gegenhalter mit Spannfutter (50) zum zusätzlichen Abstützen des Werkstücks,
dadurch **gekennzeichnet**, daß
– der Werkstückträger (30) einen Durchlaß aufweist, durch den eine Werkstoffstange (18) derart hindurchschiebbar ist, daß sie mit ihrem Endabschnitt (18′), welcher ein Werkstück bildet, in den Arbeitsbereich der Werkzeugspindel (25) hineinragt,
– am Fahrständer (20) eine Abtrenneinheit (26) zum Abtrennen des Endabschnitts (18′) der Werkstoffstange (18) angeordnet ist, und
– längs der Schwenkachse (A) ein zusätzlicher Schlitten (40) verfahrbar ist, auf dem eine Greif- und Schwenkeinheit (44) als Gegenhalter angeordnet ist, die über dessen Spannfutter (50) den aus dem Werkstückträger (30) herausragenden Abschnitt (18′) der Werkstoffstange (18) ergreift und nach Abtrennen desselben um eine die Schwenkachse (A) des Werkstückträgers (30) rechtwinklig schneidende Achse (S) derart schwenkbar ist, daß die durch das Abtrennen entstandene Trennfläche des Abschnitts (18) der Werkstoffstange (18) in den Arbeitsbereich der Werkzeugspindel (25) gelangt.

2. Bohr- und Fräswerk nach Anspruch 1,
dadurch **gekennzeichnet** , daß die Abtrenneinheit (26) an einem Schlitten (27) angeordnet ist, der am Fahrständer (20) im rechten Winkel zur Schwenkachse (A) verschiebbar geführt ist.

3. Bohr- und Fräswerk nach einem der vorhergehenden Ansprüche,
dadurch **gekennzeichnet**, daß auf einer Kreuzschlittenanordnung (40), die unabhängig vom Fahrständer (20) in den gleichen Richtungen wie dieser verfahrbar ist, ein Revolverkopf (58) angeordnet ist, der mindestens eine Werkzeugspindel (56) trägt.

## Revendications

1. Machine à aléser et à fraiser, comprenant
– un élément porte-pièce (30), conçu à serrer une pièce à usiner et capable d'être tourné pas à pas autour d'un axe de pivotement horizontal (A) qui se confond avec l'axe de la pièce à usiner,
– une broche porte-outil (25), au moins, qui a un axe de broche (Z) disposé sous un angle droit par rapport à l'axe de pivotement (A) et qui peut être déplacée dans la direction longitudinale dudit axe de broche (Z),
– un montant mobile (20) qui est déplaçable dans une direction (axe X) parallèle à l'axe de pivotement (A) ainsi que dans une direction (axe Y) perpendiculaire à l'axe de pivotement (A) et à l'axe de broche (Z), et qui supporte la broche porte-outil (25), ainsi
– qu'un contre-support muni d'un mandrin de serrage (50) destiné à former un support supplémentaire de la pièce à usiner,
**caractérisée** en ce que
– l'élément porte-pièce (30) comporte un passage à travers lequel une barre de matériau (18) peut être déplacée de telle manière qu'elle entre dans la zone de travail de la broche porte-outil (25) par son bout (18′) qui constitue une pièce à usiner,
– une unité de tronçonnage (26), destinée à séparer le bout (18′) de la barre de matériau (18), est disposée sur le montant mobile (20), et
– en ce qu'un chariot supplémentaire (40) est déplaçable le long de l'axe de pivotement (A),,chariot sur lequel est disposée, en tant que contre-support, une unité de préhension et de pivotement (44) qui, par l'intermédiaire du mandrin de serrage (50) du contre-support, saisit la partie (18′) de la barre de matériau (18) sortant de l'élément porte-pièce (30) et, après son tronçonnage, peut être pivotée autour d'un axe (S) passant, sous un angle droit, par l'axe de pivotement (A) de l'élément porte-pièce (30), de manière que la surface de séparation produite par le tronçonnage sur le bout (18) de la barre de matériau (18) arrive à se positionner dans la zone de travail de la broche porte-outil (25).

2. Machine à aléser et à fraiser selon la revendication 1, **caractérisée** en ce que l'unité de tronçonnage (26) est disposée sur un chariot (27) qui est guidé à se déplacer sur le montant mobile (20) sous un angle droit par rapport à l'axe de pivotement (A).

3. Machine à aléser et à fraiser selon l'une quelconque des revendications précédentes, **caractérisé**e en ce que, sur un ensemble à chariot à croix (40) qui est déplaçable indépendamment du montant mobile (20) dans les mêmes directions que celui-ci, une tourelle revolver (58) est disposée qui supporte au moins une broche porte-outil (56).

## Claims

1. Boring and milling machine, comprising
– a work support (30) designed to clamp a workpiece and being capable of turning stepwise about a horizontal pivot axis (A) which coincides with the axis of the workpiece,
– at least one tool-carrying spindle (25) which includes a spindle axis (Z) disposed at right angles to the pivot axis (A), and is movable in the longitudinal direction of this spindle axis (Z),
– a moving column (20) which is slidable in a direction (X axis) parallel with the pivot axis (A) and in a direction (Y axis) square to the spindle axis (Z), and which supports the tool-carrying spindle (25), as well as
– a steady support having a clamping chuck (50) providing an additional support for the workpiece,
**characterized** in that
– the work support (30) has a through-going opening through which a material bar (18) is slidable in such a way that it has its extremity (18′) which forms a workpiece protrude into the working area of the tool-carrying spindle (25),
– a parting-off unit (26) is arranged on the moving column (20) for separating the extremity (18′) from the material bar (18), and
– an additional slide (40) is movable along the pivot axis (A) and has arranged on it a gripping and pivoting unit (44) as a steady support which, by means of the latter's clamping chuck (50), grips the portion (18′) of the material bar (18) which protrudes from the work support (30) and, after said portion has been parted off, is pivotable about an axis (S) which in a normal direction intersects the pivoting axis (A) of the work support (30), such that the parting plane produced in the parting-off operation on the portion (18) of the material bar (18) is moving into the working area of the tool spindle (25).

2. Boring and milling machine according to claim 1, **characterized** in that the parting-off unit (26) is arranged on a slide (27) which is slidably guided on the moving column (20) to move at right angles to the pivot axis (A).

3. Boring and milling machine according to any of the preceding claims, **characterized** in that on a cross slide arrangement (40) which is movable independently from the moving column (20) in the same directions as the latter, a turret head (58) is arranged which supports at least one tool-carrying spindle (56).

FIG.1

EP 0 368 996 B1

FIG. 2

EP 0 368 996 B1

FIG. 3

FIG. 4